# EUROPEAN PATENT APPLICATION

(11) **EP 4 825 462 A1**
(43) Date of publication of application: **21.10.2026**
(21) Application number: 26161424.2
(22) Date of filing: 27.02.2026
(51) Int. Cl.: A63F 13/822, A63F 13/46, A63F 13/58, A63F 13/833

(54) **GAME SYSTEM, GAME METHOD, AND GAME PROGRAM**

(30) Priority: 16.04.2025 JP 2025067582
(71) Applicant: SNK Corporation, Osaka-shi, Osaka 5320003 (JP)
(72) Inventor: OCHI, Akiko, OSAKA-SHI, OSAKA (JP)
(74) Representative: Algemeen Octrooi- en Merkenbureau B.V.

(57) **Abstract**

A game system (1) for causing users to play a competitive video game including a fighting game, where the competitive video game includes a plurality of modes, and the modes include an RPG mode as a story mode for a single player, and a user-versus-user battle mode as a mode for users to battle each other. The game system (1) includes: a point granting unit (10) that grants points obtained in modes other than the RPG mode in the competitive video game as points for a character in the RPG mode; a point accumulating unit (20) that accumulates the points granted by the point granting unit (10); and a level-up unit (30) that grows the character in the RPG mode on the basis of the points accumulated by the point accumulating unit (20).

## Description

### BACKGROUND OF THE INVENTION

### 1. Field of the Invention

This invention relates to a game system, a game method, and a game program. More specifically, the invention relates to a game system, a game method, and a game program that are capable of allocating experience values from other modes to an RPG mode.

### 2. Description of Related Art

In fighting games, a game may include a story mode (RPG mode) in addition to a user-versus-CPU battle mode for competition against a computer and a player-versus-player battle mode for competition against another player. In the story mode, players generally gain experience values by battling enemy characters and completing quests (missions) as in an RPG to raise the level of their character, thereby allowing them to take on more challenging quests and obtain special items. Such a story mode allows even players that are not adept at player-versus-player battles to enjoy the game.

For example, Japanese Unexamined Patent Application Publication No. 2006-42879 discloses a game program causing a computer to execute a game in which instructions generated by input operations of a player are given to a main character and the main character is caused to act in a virtual world to advance a story. The game program causes the computer to, for each of a plurality of events set in the game, cause the main character to perform predetermined actions on the basis of the instructions generated by the player to clear the event, thereby updating at least one of a plurality of parameter values set for the main character to grow the main character, prompt the player to enter an evaluation command for an action taken by the main character, and accumulate the entered evaluation command as points, and set update characteristics of the parameter values on the basis of the accumulated points.

The story mode is basically available for each character or for a specific character. In stories prepared for all characters, battles in the RPG mode are conducted as fighting battles; however, selection of a character that the player does not usually use results in increased difficulty in defeating enemies due to unfamiliarity with the controls for the character, thereby hindering progression of the story, restricting accumulation of experience values solely through the story mode, limiting character leveling, and potentially blocking further progression of the story.

### SUMMARY OF THE INVENTION

In view of the foregoing, the present invention provides a game system, a game method, and a game program that can allocate experience values obtained in modes other than an RPG mode to the RPG mode, level up a character and advance a story in the RPG mode.

That is, a game system according to the first aspect is directed to game system for causing users to play a competitive video game including a fighting game, wherein the competitive video game includes a plurality of modes, and the modes include an RPG mode as a story mode for a single player, and a user-versus-user battle mode as a mode for users to battle each other. The game system includes: a point granting unit that grants points obtained in modes other than the RPG mode in the competitive video game as points for a character in the RPG mode; a point accumulating unit that accumulates the points granted by the point granting unit; and a level-up unit that grows the character in the RPG mode on the basis of the points accumulated by the point accumulating unit.

The second aspect is that, in the game system according to the first aspect, the point granting unit may grant points obtained by a first character in modes other than the RPG mode to the first character or a second character that is different from the first character in the RPG mode.

The third aspect is that, in the game system according to the second aspect, a conversion rate for using points obtained by the first character in modes other than the RPG mode as experience values for the first character in the RPG mode may be different from a conversion rate for using the points obtained by the first character in the modes other than the RPG mode as experience values for the second character in the RPG mode.

The fourth aspect is that, in the game system according to the first aspect, growing the character by the level-up unit may include raising a level set for a character in the RPG mode, raising status of the character, and raising a level of skills of the character.

The fifth aspect is that, in the game system according to the fourth aspect, growing the character by the level-up unit may include automatically raising a level set for a character in the RPG mode, status of the character, and a level of skills of the character, and manually raising an ability value of one of the skills of the character that the user wishes to raise.

A game method according to the sixth aspect is directed to a game method for causing users to play a competitive video game including a fighting game, wherein the competitive video game includes a plurality of modes, and the modes include an RPG mode as a story mode for a single player, and a user battle mode as a mode for users to battle each other, the game method causing a computer to execute: a point granting step of granting points obtained in modes other than the RPG mode in the competitive video game as points for a character in the RPG mode; a point accumulating step of accumulating the points granted in the point granting step; and a level-up step of growing the character of the user in the RPG mode on the basis of the points accumulated in the point accumulating step.

A game program according to the seventh aspect is directed to a game program for causing users to play a competitive video game including a fighting game, wherein the competitive video game includes a plurality of modes, and the modes include an RPG mode as a story mode for a single player, and a user-versus-user battle mode as a mode for users to battle each other, the game program causing a computer to execute: a point granting function that grants points obtained in modes other than the RPG mode in the competitive video game as points for a character in the RPG mode; a point accumulating function that accumulates the points granted by the point granting function; and a level-up function that grows the character of the user in the RPG mode on the basis of the points accumulated by the point accumulating function.

The game system, game method, and game program according to the present invention can allocate the experience values obtained in the modes other than the RPG mode to the RPG mode, level up the characters and advance the story in the RPG mode.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 shows a diagram illustrating a relationship among player terminals, communication network, and a server machine of a game system according to a present embodiment,
FIG. 2 shows a block diagram illustrating functions of the game system according to the present embodiment,
FIG. 3 shows a diagram illustrating a search progress screen of an RPG mode of the game system according to the present embodiment,
FIG. 4 shows a diagram illustrating a screen of inspection and field investigation in the RPG mode of the game system according to the present embodiment,
FIG. 5 shows a diagram illustrating a screen of a player-versus-CPU story mode in the game system according to the present embodiment,
FIG. 6 shows a diagram illustrating a screen indicating that a level-up has occurred in the RPG mode of the game system according to the present embodiment, and
FIG. 7 shows an example of a flowchart illustrating processing of a game server for a game method according to a present embodiment.

### DETAILED DESCRIPTION OF EMBODIMENTS

A game system 1, a game method, and a game program according to a present embodiment is characterized in that a level of a character is increased by granting experience values obtained in modes other than an RPG mode as points in the RPG mode. The points are directed to privileges or service points granted for various actions in the game. Specifically, for example, ten points are granted when a character defeats one CPU opponent in a player-versus-CPU mode, and twenty points are granted when the first character defeats the second character in a user-versus-user mode.

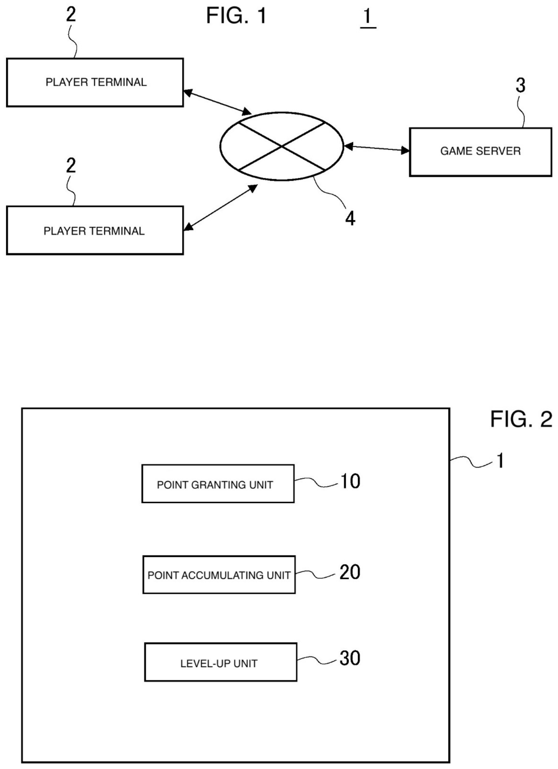

With reference to FIG. 1, a configuration of the game system 1 according to a present embodiment will be described. FIG. 1 shows a schematic diagram illustrating an example of the configuration of the game system 1 according to the present embodiment.

The game system 1 according to the present embodiment is executable on a player terminal 2 (which may be a personal computer, a tablet terminal, a smartphone, or a dedicated game console, but is not limited thereto), and is configured such that information terminals of a plurality of players are connected to a game server 3 via a communication network 4, thereby enabling each player to use a character operated by the player to either compete individually against a CPU character operated by a CPU or compete against other players using characters operated by the respective players.

The game system 1 allows users to play a competitive video game including a fighting game. The competitive video game includes a plurality of modes. The mode refers to a form, style, or manner in which the game is played. Examples may include an arcade mode (player-versus-CPU story mode), player-versus-CPU battle mode, RPG mode, and user-versus-user battle mode.

The RPG mode corresponds to a story mode. For example, battling enemy characters and completing quests (missions) allow the player to obtain experience values and raise a level of the character to be able to take on more difficult quests or obtain special items. In addition, raising the level of the character operated by the player facilitates the completion of the battles and quests. As an example, the RPG mode may be directed to a mode in which the player, in a town set in a game (in a virtual space), gains experience values and rewards by satisfying various conditions, develops characters by leveling up and equipping them with skills, and defeats enemies in various regions to restore peace to the town. The RPG mode is basically directed to a story mode for one player, but may also be a story mode for two or more players.

The user-versus-user mode is directed to a mode in which users compete against each other. For example, the first user and the second user select their favorite characters and use them to attack each other. In addition to punches, kicks, and other blows, attacks may include throwing, jointing, and strangling techniques, and may include attacks with chairs, desks, and other deadly weapons. It may also include attacks using magic, ninjutsu, sorcery, and jujutsu, for example.

Other modes may include an arcade mode (user-versus-CPU Story Mode) and user-versus-CPU battle mode. The RPG mode is also directed to a user-versus-CPU story mode, but in the RPG mode, the characters grow, whereas in the arcade mode, the characters do not. The user-versus-CPU mode is not directed to a match between the first user and the second user, but between one user and the CPU (computer).

As shown in FIG. 2, the game system 1 according to the present embodiment includes a point granting unit 10, a point accumulating unit 20, and a level-up unit 30.

The point granting unit 10 grants points obtained in modes other than the RPG mode in the competitive video game as points for the character in the RPG mode. The point granting unit 10 grants points obtained by the first character in modes other than the RPG mode to the first character or the second character that is different from the first character in the RPG mode. For example, if the first character defeats one CPU opponent in the user-versus-CPU battle mode, the first character obtains ten points, and if the first character defeats the second character in the user-versus-user battle mode, the first character obtains twenty points, and the point granting unit 10 grants these points to the first character. The points may be granted by various actions on the game, and in addition to competition, the game may be configured such that, for example, a set number of points are granted by the achievement of goals (trophies) set in the game. An example of such an action may be to exceed ten hours of total play time, or to watch the story endings for five characters.

The conversion rate for using the points acquired by the first character in modes other than the RPG mode as experience values for the first character in the RPG mode may be different from the conversion rate for using the same points as experience values for the second character in the RPG mode. For example, if points obtained using the first character in modes other than the RPG mode are granted to the first character in the RPG mode, 100% of the points are granted. In contrast, if points obtained using the first character in modes other than the RPG mode are granted to the second character in the RPG mode, only 50% of the points are granted. The conversion rate may be set higher for characters with similar (close) control schemes and lower for characters with dissimilar (distant) control schemes. For example, when 100 points are obtained by using the first character in a mode other than the RPG mode, the points may be converted such that 80 points are granted when used for the second character with similar control schemes in the RPG mode, and 40 points are granted when used for the second character with dissimilar control schemes. This conversion rate may be set in reverse. If the conversion rate is set in reverse, more points are granted to characters that the player is less proficient at, thereby facilitating progression of the RPG mode for such characters.

The point accumulating unit 20 accumulates points obtained in modes other than the RPG mode in the competitive video games as points that are converted in the RPG mode. The point accumulating unit 20 may accumulate points for each character that can be used in the RPG mode.

The level-up unit 30 grows characters in the RPG mode on the basis of the points accumulated by the point accumulating unit 20. Growing the character by the level-up unit 30 includes raising the level set for the character in the RPG mode, raising the status of the character, and raising the level of the skills of the character.

The increase in the level itself of the character may include an increase in status or learning new spells or special skills. The increase in the ability of the character may include an increase of the level of the skill as an ability that the character possesses (i.e., increasing the performance of the ability). Increasing status of a character may include increasing one or more types of status of a character (for example, health, attack power, agility, defense power, and intelligence). Growing a character by the level-up unit 30 may include automatically raising, in the RPG mode, the level set for the character, the status of the character, and the level of the skill of the character, and manually raising the ability value of the skill of the character that the user wishes to raise.

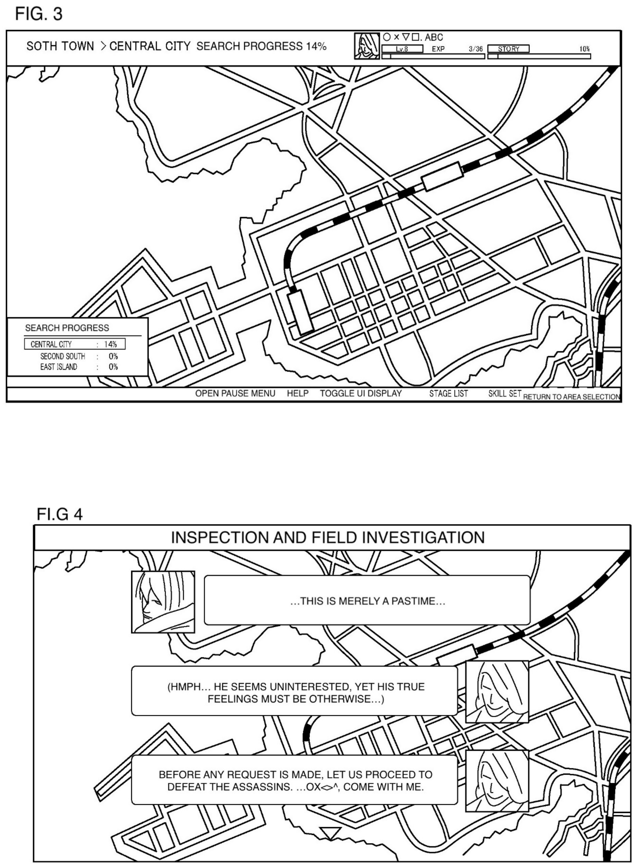

FIG. 3 shows a diagram illustrating an example of a search progress screen of the RPG mode of the game system 1 according to the present embodiment. As shown in FIG. 3, a character selected by the user explores the city. In this case, the search progress of the city is 14%.

FIG. 4 shows a diagram illustrating an example of a scene in story progression of the RPG mode of the game system 1 according to the present embodiment. Here, inspection and field investigation are represented. The inspection is to examine and clarify the current situation, and a field investigation is to actually go to the site and examine it. In this mode, the characters explore the city and restore peace by defeating enemies, and thus they inspect and investigate the city for enemies. As illustrated in FIG. 4, internal thoughts of the first character, stating "...this is merely a pastime...," and internal thoughts of the second character, stating "Hmph... He seems uninterested, yet his true feelings must be otherwise..." and "Before any request is made, let us proceed to defeat the assassins. ...OX<>^, come with me.," are displayed.

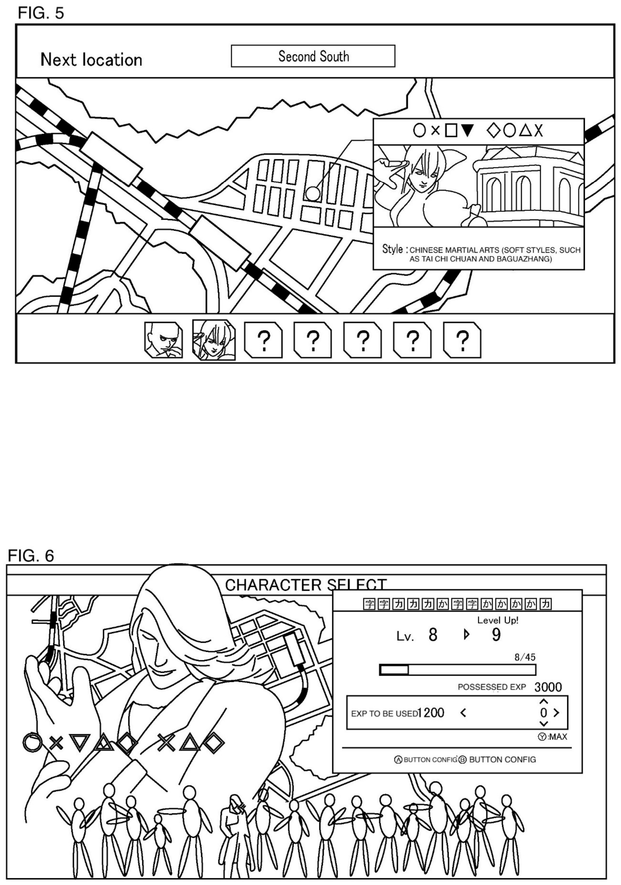

FIG. 5 shows a diagram illustrating a screen of a player-versus-CPU story mode in the game system 1 according to the present embodiment. FIG. 5 displays that a character selected by the CPU includes a master of Chinese martial arts identified by the handle name "OX[]v <>O^x." The character selected by the first user develops a story with this "OX[]v <>O^x."

FIG. 6 shows a diagram illustrating a screen indicating that a level-up has occurred in the RPG mode of the game system 1 according to the present embodiment. As shown in FIG. 6, the level of the second character increases from eight to nine, and the experience value (EXP) in his possession is 3,000. This is because points are granted by the point granting unit 10 on the basis of the experience values obtained in the battle mode, the points are accumulated by the point accumulating unit 20, and the level of the second character is increased by the level-up unit 30.

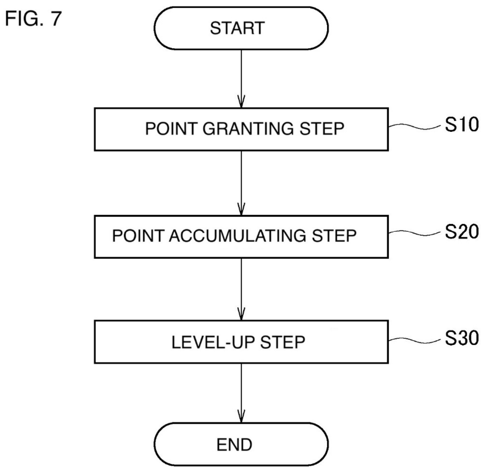

With reference to FIG. 7, a game program according to the present embodiment will be described along with a game method. FIG. 7 shows an example of a flowchart of the game method according to the present embodiment.

The game method is executed by the game server 3 of the game system 1 on the basis of the game program.

The game program includes a point granting step S10, a point accumulating step S20, and a level-up step S30.

The game program enables the game server 3 of the game system 1 to implement the functions of point granting, point accumulating, and level-up. These functions are performed in the order shown in the flowchart in FIG. 7.

The point granting function grants points obtained in modes other than the RPG mode in the competitive video game as points for the character in the RPG mode (step S10: point granting step).

The point accumulating function accumulates the points granted in the point granting step (step S20: point accumulating step).

The level-up function grows the character of the user in the RPG mode on the basis of the points accumulated in the point accumulating step (step S30: level-up step). However, if the accumulated points are insufficient to cause the character to grow, step S30 is omitted.

### About Functions and Circuits

Next, functions and circuitry of the game system 1 described above will be described.

The functional units of each game server 3 may be embodied as functions of a computer arithmetic processor, for example. That is, the game server 3 may be embodied as a point granting function, a point accumulating function, and a level-up function, respectively, by a computer arithmetic processor, for example.

The game program is capable of causing a computer to embody the functions described above. The game program may be recorded on a non-transitory computer-readable storage medium such as a memory, solid state drive, hard disk drive, or optical disk, for example. The storage medium may be rephrased as a non-transitory computer readable medium that stores, for example, a program for data distributed processing. The game program may also be transmitted online.

The computer arithmetic processor described above may be configured by, for example, an integrated circuit. That is, the game server 300 of the game system 1 may be embodied as a point granting circuit, a point accumulating circuit, and a level-up circuit configuring a computer arithmetic processor, for example.

The present invention is not limited to the game system 1, game method, and game program according to the embodiment above, but may be implemented by various other variations or applications if they do not depart from the spirit of the present invention recited in the claims. In the embodiment described above, the word "information" is used, but the word "information" can be rephrased as "data" and the word "data" can be rephrased as "information."

### Description of Reference Numerals

1: Game System
2: Player Terminal
300: Game Server
4: Communication Network
10: Point Granting Unit
20: Point Accumulating Unit
30: Level-Up Unit

## Claims

1. A game system (1) for causing users to play a competitive video game including a fighting game, wherein
the competitive video game includes a plurality of modes, and
the modes include an RPG mode as a story mode for a single player, and a user-versus-user battle mode as a mode for users to battle each other, the game system (1) comprising:
a point granting unit (10) that grants points obtained in modes other than the RPG mode in the competitive video game as points for a character in the RPG mode;
a point accumulating unit (20) that accumulates the points granted by the point granting unit (10); and
a level-up unit (30) that grows the character in the RPG mode on the basis of the points accumulated by the point accumulating unit (20).

2. The game system (1) according to claim 1, wherein the point granting unit (10) grants points obtained by a first character in modes other than the RPG mode to the first character or a second character that is different from the first character in the RPG mode.

3. The game system (1) according to claim 2, wherein a conversion rate for using points obtained by the first character in modes other than the RPG mode as experience values for the first character in the RPG mode is different from a conversion rate for using the points obtained by the first character in the modes other than the RPG mode as experience values for the second character in the RPG mode.

4. The game system (1) according to claim 1, wherein growing the character by the level-up unit (30) includes raising a level set for a character in the RPG mode, raising status of the character, and raising a level of skills of the character.

5. The game system (1) according to claim 4, wherein growing the character by the level-up unit (30) includes automatically raising a level set for a character in the RPG mode, status of the character, and a level of skills of the character, and manually raising an ability value of one of the skills of the character that the user wishes to raise.

6. A game method for causing users to play a competitive video game including a fighting game, wherein
the competitive video game includes a plurality of modes, and
the modes include an RPG mode as a story mode for a single player, and a user battle mode as a mode for users to battle each other, the game method causing a computer to execute:
a point granting step of granting points obtained in modes other than the RPG mode in the competitive video game as points for a character in the RPG mode;
a point accumulating step of accumulating the points granted in the point granting step; and
a level-up step of growing the character of the user in the RPG mode on the basis of the points accumulated in the point accumulating step.

7. A game program for causing users to play a competitive video game including a fighting game, wherein
the competitive video game includes a plurality of modes, and
the modes include an RPG mode as a story mode for a single player, and a user-versus-user battle mode as a mode for users to battle each other, the game program causing a computer to execute:
a point granting function that grants points obtained in modes other than the RPG mode in the competitive video game as points for a character in the RPG mode;
a point accumulating function that accumulates the points granted by the point granting function; and
a level-up function that grows the character of the user in the RPG mode on the basis of the points accumulated by the point accumulating function.
